# EUROPEAN PATENT SPECIFICATION

(11) **EP 2 408 628 B1**
(45) Date of publication and mention of the grant of the patent: **16.05.2018**
(21) Application number: 10709508.5
(22) Date of filing: 17.03.2010
(51) Int. Cl.: B60C 11/00, B60C 11/03, B60C 13/00

(54) **TYRE PROVIDED WITH COLOURED APPLIQUÉS**
REIFEN VERSEHEN MIT SCHUTZ-ELEMENTEN
PNEUMATIQUE POURVU D'APPLIQUES COLOREES

(30) Priority: 18.03.2009 FR 0951706; 29.06.2009 US 221369 P
(43) Date of publication of application: 25.01.2012
(73) Proprietor: Compagnie Générale des Etablissements Michelin, 63000 Clermont-Ferrand (FR)
(72) Inventor: LARREGAIN, Arnaud, F-63300 Thiers (FR); MUHLHOFF, Olivier, F-63000 Clermont-Ferrand (FR)
(74) Representative: Sidhu, Alban
(86) International application number: PCT/EP2010/053479
(87) International publication number: WO 2010/106112

(56) References cited:
- EP-A- 0 667 251
- EP-A- 1 462 277
- FR-A- 2 871 411
- JP-A- 61 146 605
- US-A- 2 272 891
- US-A1- 2007 256 771
- US-B1- 6 709 138

## Description

### FIELD OF THE INVENTION

The present invention relates to tyres for vehicles. It relates more specifically to tyres having a decorative applique on their outer surface, and to methods for decorating or personalizing tyres.

### BACKGROUND

The practice of providing the sidewalls of a tyre with decorative appliques and/or appliques presenting information about the tyre is well known. The use of transfers (or "decals") designed for application to the rubber was proposed as far back as 1940, as shown in document US2 188 866. Document US4 461 795 teaches the bonding of appliques, particularly in the form of letters, to a sidewall of a tyre. The same principle is applied in document US5 300 164. It is also prior art to use hot-vulcanizable coloured inks, as taught in document US5 904 794. A great deal of effort has been put into displaying bar codes on the sidewalls of tyres. Document US5 824 397is an example of this.

While many documents describe the decoration and/or presentation of information on the sidewalls of a tyre, few documents describe the decoration and presentation of information on the tread of a tyre. This is partly explained by the special role of the tread, which is to establish and maintain contact with the surface on which the tyre is rolling. This is so crucial to the grip of the vehicle, and hence to the safety of the users of the vehicle, that it is often preferred to limit to the sidewalls the means for decorating or personalizing the tyre or marking it with information about the tyre.

Two exceptions may nonetheless be noted. First, there have been attempts to provide tyres with partially or completely coloured treads. An example is document US 2002/0144761, which describes a tyre having coloured sidewalls and a tread having coloured grooves. Tyres with a partially coloured tread have been commercialised under the trademark Coraldo by Michelin. In this kind of tyre the decorative appearance does not reduce the performance of the tyre because the tread itself is made of coloured materials, and the decorative effect is therefore obtained without modifying the structure or functioning of the tread. However, the decorative effect is only achieved at the cost of greatly increasing the complexity of the manufacturing process, as different colour materials have to be made and applied. These techniques are therefore unsuitable for offering the user of a tyre the opportunity to personalize his tyre and create decorative effects to his own personal taste.

The second exception is that, unlike the sidewalls of a tyre, the tread is designed to wear very significantly over the life of the tyre. As a means of helping to ensure that the degree of wear does not become so great as to jeopardize the performance of the tyre, especially on wet surfaces, wear indicators are provided within the tread. The use of coloured rubber compositions has often been envisaged: for example, document FR1 480 472 provides a tread incorporating coloured materials contrasting with the colours of the tyre, which become visible when the permitted wear limit for treads has been reached. Document FR797 713teaches the vulcanizing of a block of rubber within the tread, the block being divided diagonally into two parts of different colours. As the tread wears down, the distribution of the colours visible on the surface changes: when the visible part of the block has completely changed colour, the tyre must be replaced. Document US4 226 274 shows a more recent example of the application of the same principle.

In all these applications, the coloured elements are vulcanized into the tread in order to withstand the high stresses and considerable heating experienced by all tread elements when the tyre is rolling on the ground. Adhesive bonding appears never to have been considered, no doubt because of the fear that bonded parts would detach after a short period of use.

Document US 2 272 891 A discloses elements that are mounted in the circumferential grooves of the tread under tension and that may be of contrasting colour from the remainder of the tread and thus to provide a distinctive colour scheme of the tire.

### SUMMARY OF THE INVENTION

One of the objects of the present invention is to provide users of tyres with a simple method for personalizing or decorating the tyre.

This object is achieved in accordance with one aspect of the invention directed to a method for decorating a tyre comprising a tread provided with a rolling surface, comprising the following steps:
(A) providing a recess in the tread, the recess opening onto the rolling surface, the recess being delimited by a bottom wall and one single side wall;
(B) applying an applique comprising at least one portion of a colour other than black into the recess; and
(C) fixing the applique by means of an adhesive to at least a portion of said bottom or side wall of the recess, in such a way that the portion of a colour other than black of the applique is visible from a viewpoint outside of the tread and facing the applique.

It should be noted that the bottom wall and the side wall are not necessarily distinct from each other and can be merged. For instance, in a recess of semi-spherical shape, the same wall forms both the bottom and side wall.

The fact that the recesses under consideration have only one side wall excludes grooves, which have two side walls, from being considered to be recesses in the above sense.

Those skilled in the art will understand that the reference to the colour "other than black" has been chosen because tyre treads are almost invariably black. If the invention was to be implemented on a tread having a certain colour other than black, the applique would have to comprise at least one portion of a colour other than this colour.

The method of the invention makes it possible to obtain a tyre decorated with coloured designs without complicating the method of manufacture.

Another aspect of the invention relates to a tyre comprising a tread provided with a rolling surface, at least one recess being formed in the tread, which recess opens onto the rolling surface, the recess being delimited by a bottom wall and one single side wall (which walls, as stated above, can be merged), the tyre also comprising at least one applique comprising at least one portion of a colour other than black, and the applique being inserted into the recess and fixed by means of an adhesive to at least a portion of said bottom or side wall, in such a way that the portion of a colour other than black of the applique is visible from a viewpoint radially outside of the tread and facing the applique.

The applicant has found that, surprisingly, and contrary to expectations, an applique bonded adhesively into such a recess in the tyre exhibits good resistance to the stresses experienced by the tread.

According to one advantageous embodiment, the applique is fixed to at least a portion of said bottom wall. It preferably covers at least 80 % of the surface of the bottom wall.

The decoration resists best to stresses when the appliqué does not project outside of the rolling surface. The life of the appliqué is longest when the recess is deep enough for the appliqué to be entirely radially inside of the rolling surface, i.e. when the radially outermost points of the appliqué are radially inside of the rolling surface of the tread.

The recess may be made in a number of different ways, especially by moulding, when the tyre is vulcanized in a mould, in which case it is the tyre manufacturer who must make the recess. Alternatively the recess may be made by drilling or milling the vulcanized tyre, which opens up the possibility of the end user adding appliques to places on the tread which he or she wishes to decorate.

According to one preferential embodiment, the side wall of the recess is a closed surface. Within the present document, the side wall of a recess is considered to be a "closed surface" if its intersection with the rolling surface of the tread, when the tyre is new, is a closed curve, i.e. a curve with no endpoints. By contrast, the side wall of a recess is considered to be an "open surface" if its intersection with the rolling surface of the tread, when the tyre is new, is an open curve, i.e. a curve with two endpoints. If the side wall of the recess is a closed surface, the appliqué is particularly well protected from being detached from the tyre.

When determining whether the side wall of the recess is a closed surface, sipes opening into the recess are to be disregarded. As a matter of fact, when the side wall of the recess is a closed surface and when the radially outermost points of the appliqué are radially inside of the rolling surface of the tread, it is advantageous to provide sipes through which the air emprisoned within the volume of the recess, when the rolling surface surrounding the recess comes into contact with the ground on which the tyre is rolling, can escape. This is advantageous in particular in view of the noise generated by the tyre when it is rolling.

According to one preferential embodiment, the side wall of the recess is a quasi-closed surface. The side wall of a recess is considered to be a "quasi-closed surface" if its intersection with the rolling surface of the tread, when the tyre is new, is an open curve, i.e. a curve with two endpoints C1 and C2, and if the length of the straight line L connecting endpoints C1 and C2 is smaller than the maximum distance between any two points of curve C, measured parallelly to said straight line L. A recess the side wall of which is quasi-closed still protects the appliqué because the narrowing of the side wall towards the lateral opening of the recess hinders the appliqué from being displaced into the opening.

Preferably, the length of the straight line L connecting endpoints C1 and C2 is smaller than 50 % of the maximum distance between any two points of curve C, measured parallelly to said straight line L, and even more preferably, smaller than 20 % of the maximum distance between any two points of curve C, measured parallelly to said straight line L.

Another aspect of the invention relates to a kit for decorating a tyre according to the method disclosed herein, the kit comprising at least one appliqué comprising at least one portion of a colour other than black, the appliqué being designed to be inserted into a recess in the tyre tread, which recess opens onto the rolling surface, the recess being delimited by a bottom wall and a side wall, wherein the kit also comprises a suitable adhesive for fixing the appliqué to at least a portion of said bottom or side wall of the recess.

The kit preferably also comprises a set of instructions describing at least steps (B) and (C) (described above) of a method according to an embodiment of the invention.

### BRIEF DESCRIPTION OF THE DRAWINGS

Figures 1 and 2 are diagrammatic views of a motorcycle tyre of the prior art.
Figure 3 is a diagrammatic view in radial section through a motorcycle tyre of the prior art.
Figures 4 and 6 are diagrammatic top views of the tread of a tyre according to embodiments of the invention.
Figures 5 and 7 are respective diagrammatic views in radial section through part of the tyres shown in Figures 4 and 6.
Figures 8 to 11 are diagrammatic views of appliques designed to be used in a method according to embodiments of the invention.
Figures 12 and 13 are diagrammatic views of tyres according to embodiments of the invention.
Figure 14 is a perspective view of a tread block comprising a recess according to an embodiment of the invention.
Figures 15 and 16 illustrate a recess having a side wall that is a quasi-closed surface.
Figure 17 is a diagrammatic view in circumferential section of part of a tyre according to an embodiment of the invention.

### DETAILED DESCRIPTION OF THE DRAWINGS

When the term "radial" is used, it is important to distinguish between several different uses of the word among those skilled in the art. Firstly, the expression refers to a radius of the tyre. It is in this sense that a point P1 is said to be "radially inside" of a point P2 if it is nearer than point P2 to the axis of rotation of the tyre. Conversely, a point P3 is said to be "radially outside" of a point P4 if it is further than point P4 from the axis of rotation of the tyre. "Radially inwards (or outwards)" means towards diminishing (or increasing) radii. This meaning of the term also applies when radial distances are being discussed.

However, a thread or a reinforcement is said to be "radial" when the thread or reinforcing elements of the reinforcement form with the circumferential direction an angle greater than or equal to 80° and less than or equal to 90°. It should be specified that in this document the term "thread" should be interpreted in the broadest sense and comprises threads in the form of monofilaments, multifilaments, a cable, a yarn or an equivalent assembly, and this irrespective of the material of which the thread is made or the surface treatment carried out to promote its adhesion to the rubber.

Lastly, "radial section" here means a section taken in a plane containing the axis of rotation of the tyre.

An "axial" direction is a direction parallel to the axis of rotation of the tyre. A point P5 is said to be "axially inside" of a point P6 if it is closer than point P6 to the mid plane of the tyre. Conversely, a point P7 is said to be "axially outside" of a point P8 if it is further than point P8 from the mid plane of the tyre. The "mid plane" of the tyre is that plane which is perpendicular to the axis of rotation of the tyre and equidistant from the annular reinforcing structures of each bead.

A "circumferential" direction is a direction that is perpendicular both to a radius of the tyre and to the axial direction. A "circumferential section" is a section in a plane perpendicular to the axis of rotation of the tyre.

"Rolling surface" here means all those points on the tread of a tyre that come into contact with the ground when the tyre is rolling.

The expression "rubber compound" means a rubber composition containing at least an elastomer and a filler.

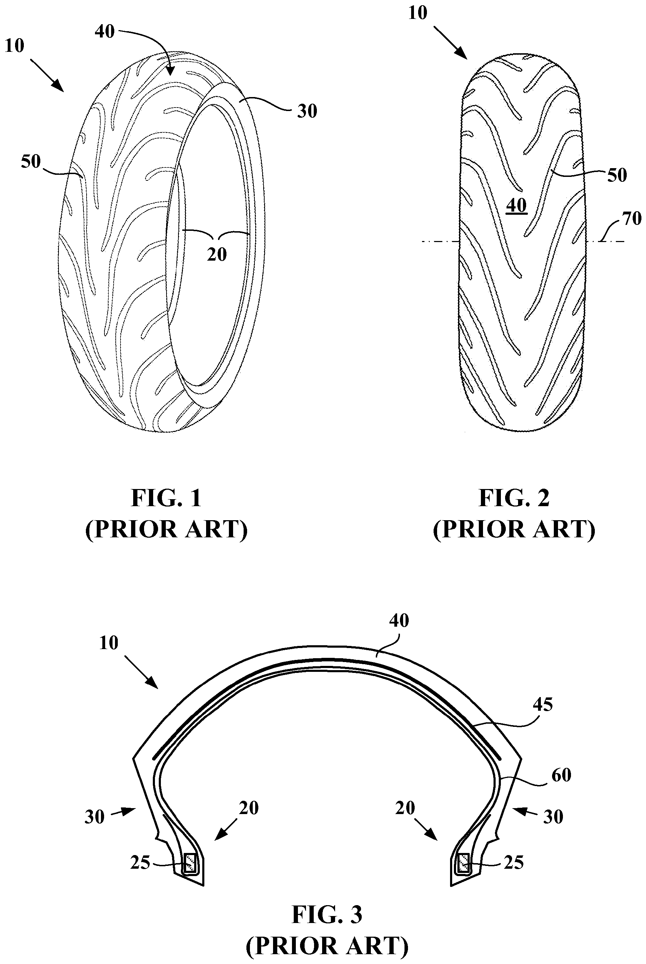

Figures 1 and 2 are diagrammatic views of a tyre 10 according to the prior art, in this case a motorcycle tyre. The tyre 10 has a crown comprising a crown reinforcement (not visible in Figure 1), on top of which is a tread 40, while two sidewalls 30 extend radially inwards from the crown, and two beads 20 lie radially inside of the sidewalls 30. The tread 40 comprises a plurality of grooves 50. The axis of rotation 70 of the tyre is also indicated in Figure 2, which shows the tyre in a top view.

Figure 3 shows diagrammatically in radial section half of a prior-art tyre 10, again a motorcycle tyre. The tyre 10 has two beads 20 designed to come into contact with a wheel rim (not shown), each bead 20 having an annular reinforcing structure, in this case a bead wire 25. Two sidewalls 30 extend radially outwards from the beads 20 and meet in a crown comprising a crown reinforcement 45 comprising at least one reinforcing ply, on top of which in the radial direction is a tread 40. The tyre 10 also has a carcass reinforcement 60 extending from the beads 20 through the sidewalls 30 to the crown. The carcass reinforcement 60 is anchored in each of the two beads 20 by a turn-up around the bead wire 25.

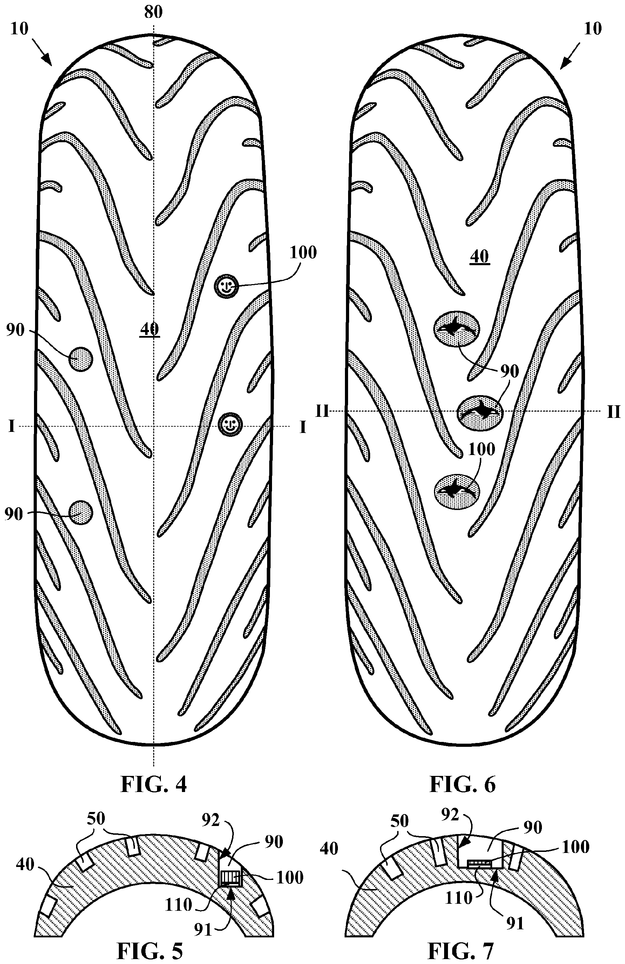

Figure 4 shows diagrammatically, in a top view, the tread of a tyre 10 according to the invention, before and after steps (B) and (C) of the method of the invention. Figure 5 shows part of this tyre 10 in a radial section taken on the axis I-I indicated in Figure 4.

Step (A) of the claimed method involves drilling or milling cylindrical recesses 90 into the tread 40. It has to be carried out by authorized and trained personnel, in accordance with instructions provided by the tyre manufacturer and using approved tools. This is all the more true as any modification of the tread surface has consequences on tyre wear, on tyre grip and on the noise generated by the tyre. In any case, the person carrying out this step must not drill beyond the depth of the tread that will be worn away during the life of the tyre. Obviously, the drill must never come in contact with the tyre belt. Therefore, a safety margin should always be observed. When drilling the recess, the tyre should be deflated or inflated at very low pressures (less than or equal to 0.3 bar).

The drilling could be carried out with a standard drill, such as the drills used for drilling wood. Alternatively, a grinder or a cutter or a heated blade could be used. It is also possible to create a recess by ablation using a highly pressurized (2000 to 4000 bar) water jet or a Laser beam. Alternatively, cylindrical recesses 90 can be moulded into the tyre when the tyre is vulcanized in a mould.

The half of the tread 40 which is on the left of the axis 80 shows the tyre as it appears after step (A) of the method, with cylindrical recesses 90 having been drilled into the tread 40. Each recess 90 is delimited by two walls: a cylindrical side wall 92 (see Figure 5) opening onto the rolling surface, and a circular bottom wall 91 (see Figure 5). The side wall 92 of the recess 90 is a "closed surface": its intersection with the rolling surface of the tread is close to circular. In step (B), an appliqué 100, in this case a cylinder with a coloured face (a "smiley"), is placed in the recess 90. The appliqué 100 covers 90 % of the surface of the bottom wall, which facilitates its being placed in a reproducible manner in the recess 90. In step (C), this appliqué is fixed by means of an adhesive layer 110 to the bottom wall 91 of the recess, so that the coloured face of the appliqué is visible from a viewpoint outside of the tread and facing the applique, as shown in the half of the tread 40 which is to the right of the axis 80.

Figures 6 and 7 show another tyre 10 according to the invention. When this tyre 10 was being moulded, recesses 90 were provided in the centre of the tread. These particular recesses 90 have an ellipsoidal cross section. A thin appliqué 100 that does not cover the whole of the bottom of the recess 90 has been applied to the bottom wall 91 of the recess, as can be seen in Figure 7, which shows part of this tyre 10 in a radial section taken on axis II-II as indicated in Figure 6.

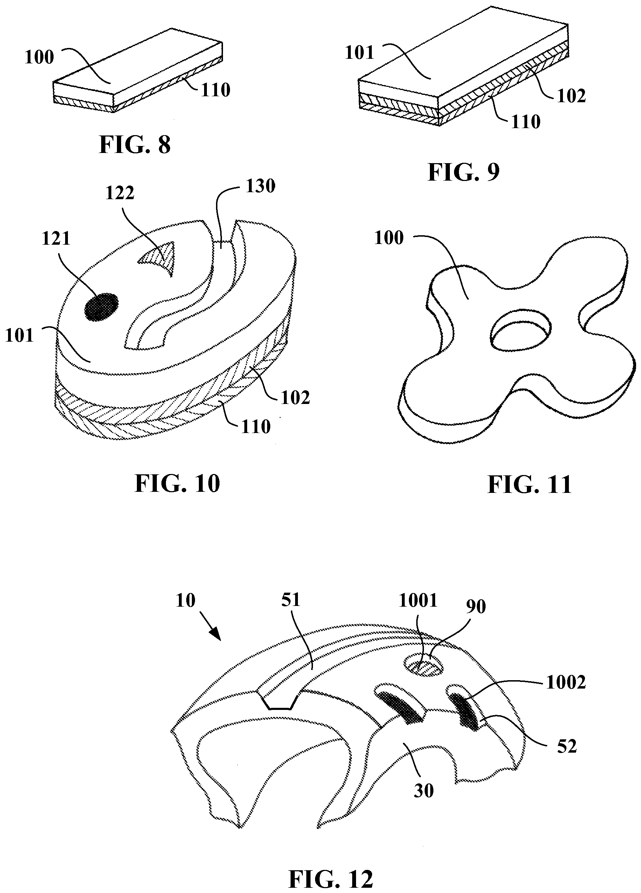

Figure 8 shows diagrammatically a very simple appliqué 100 designed to be used in a method according to the invention. This kind of appliqué can be produced in a multitude of materials, such as elastic materials (silicones, rubber, etc.), textile materials, flexible or rigid microfoam materials, rigid materials (metals, PVC, etc.), leather, velvet, etc. The adhesive layer 110 is also shown.

A wide variety of adhesives can be used, examples being acrylic adhesives (such as cyanoacrylates), silicone adhesives, polyurethane adhesives (contact or non-contact), urethane adhesives, adhesives based on latex and adhesives based on natural rubber, hotmelt adhesives, neoprene solvents, nitrile, SBR, etc.

It is of course also possible to use composite appliques, such as the appliqué shown in Figure 9. The appliqué shown here comprises two layers 101 and 102. There could for example be a foam layer attached to a rigid layer, or a coloured layer attached to a layer acting as a barrier against the migration of staining products contained in the material of the tread. Another example would be an outer layer formed by a retro reflective strip (such as a strip of 3M™ Scotchlite™) attached to an inner layer of rubber giving a certain stiffness to the whole.

Figure 10 shows another composite appliqué and illustrates the great artistic freedom which the method of the invention gives a person wishing to personalize a tyre. Like the appliqué in Figure 9, the appliqué in Figure 10 has two layers. The inner layer 102 has a structural function while the outer layer 101 is decorative. It has two designs 121 and 122 of different colours, and a groove 130. The adhesive layer 110 is also shown.

The appliques may of course have complicated geometries, as in the case of the appliqué 100 shown in Figure 11 which is in the shape of a flower and has a central hole.

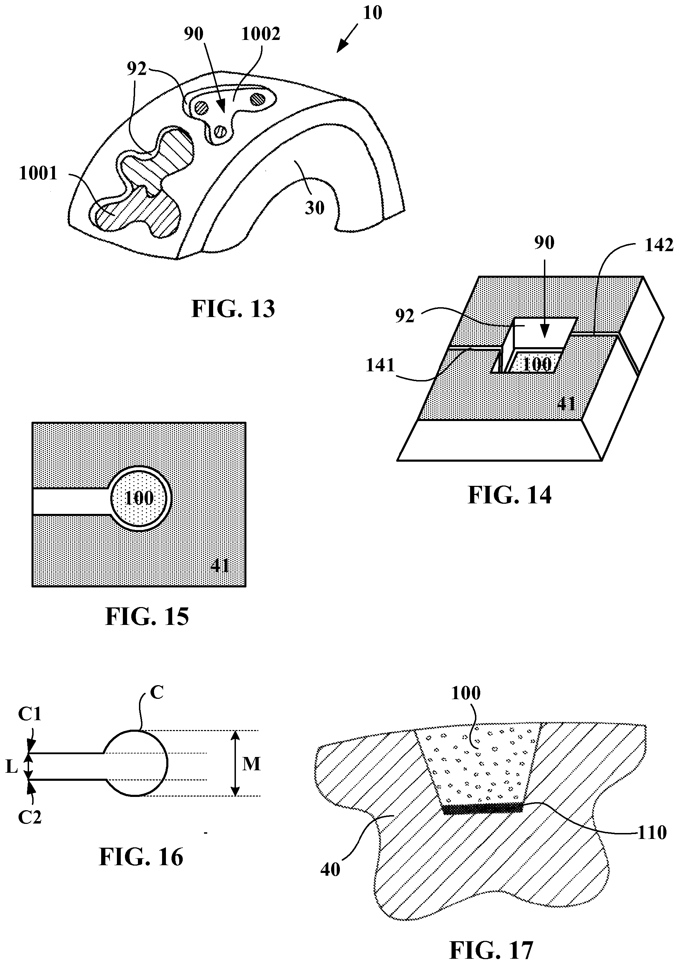

Figures 12 and 13 show diagrammatically tyres according to the invention and illustrate the great variety of decorative effects which can be obtained with the method of the invention.

The tyre 10 shown in Figure 12 is a motorcycle tyre. It has a circumferential groove 51 and recesses 52 which open at one side onto the sidewall 30 and the side wall of which is a quasi-closed surface. Appliques 1002 have been bonded into these recesses. The tyre also has a recess 90 the side wall of which is a closed surface. An appliqué 1001 has been fixed to the bottom wall of recess 90.

The invention is in no way limited to motorcycle tyres. Figure 13 shows a tyre for a passenger vehicle in which the tread has several recesses 90 of complex geometries, all having closed sidewalls 92, provided with multicoloured appliques 1001 and 1002.

As mentioned above, when determining whether the side wall of the recess is a closed surface, sipes opening into the recess are to be disregarded. In other words, it is not because there are such sipes that the sidewalls are considered not to be "closed surfaces" as defined above. As is well known to the skilled person, such sipes typically have a width of between 0.3 and 1.5 mm, measured along a direction perpendicular to the direction of their greatest dimension on the rolling surface of the tread. The presence of such sipes does not deteriorate the protection of the appliqué in the recess; it can even have positive effects. This situation is depicted in Figure 14 wherein two sipes 141 and 142 open into the recess 90 provided in tread block 41. The air emprisoned within the recess, between the appliqué 100 and the ground, when the rolling surface surrounding the recess 90 comes into contact with the ground on which the tyre is rolling, can escape through these sipes 141 an 142. This is advantageous in particular in view of the noise generated by the tyre when it is rolling.

An example of a recess 90 having a "quasi-closed" side wall is shown in Figure 15 which gives a top view of a tread block 41. The side wall of the recess has an intersection C (Figure 16) with the rolling surface of the tread. Intersection C is an open curve with two endpoints C1 and C2. The straight line L connecting these endpoints C1 and C2 has a length that is about 40 % of the maximum distance M between any two points of intersection C, measured parallelly to the straight line L.

The appliques shown in Figures 4 to 7 and 12 to 14 do not project from the rolling surface: their thickness is such that the point or points forming their radially outermost extremities are radially inside of the rolling surface of the tread. This is not however an essential feature of the invention, as shown in Figure 20, which shows diagrammatically, in a circumferential section, part of the tread of a tyre according to the invention. The tread comprises a recess into which a foam appliqué 100 is bonded (the adhesive layer 110 can be seen) so that the appliqué fills the recess until it is flush with the rolling surface. In this way the appliqué wears together with the tread 40.

## Claims

1. Tyre (10) comprising a tread (40) provided with a rolling surface, at least one recess (90) being formed in the tread, which recess opens onto the rolling surface, the recess being delimited by a bottom wall (91) and one single side wall (92), the tyre also comprising at least one appliqué (100; 1001-1002) comprising at least one portion of a colour other than black, and the appliqué being inserted into the recess and fixed by means of an adhesive (110) to at least a portion of said bottom or side wall, in such a way that the portion of a colour other than black of the appliqué is visible from a viewpoint outside of the tread and facing the appliqué, wherein said side wall of the recess is a closed surface or a quasi-closed surface.

2. Tyre according to Claim 1, wherein the appliqué is fixed to at least a portion of said bottom wall.

3. Tyre according to any one of Claims 1 or 2, wherein the appliqué covers at least 80 % of the surface of the bottom wall.

4. Tyre according to any one of Claims 1 to 3, wherein the radially outermost points of the appliqué (100) are radially inside of the rolling surface of the tread (40).

5. Tyre according to Claim 4, wherein said side wall of the recess is a closed surface and wherein at least one sipe opens into the recess.

6. Method for decorating a tyre (10) comprising a tread (40) provided with a rolling surface, comprising the following steps:
(A) providing a recess (90) in the tread, the recess opening onto the rolling surface, the recess being delimited by a bottom wall (91) and one single side wall (92), wherein said side wall of the recess is a closed surface or a quasi-closed surface;
(B) applying an appliqué (100; 1001-1002) comprising at least one portion of a colour other than black into the recess; and
(C) fixing the appliqué with an adhesive (110) to at least a portion of said bottom or side wall of the recess, in such a way that the portion of a colour other than black of the appliqué is visible from a viewpoint outside of the tread and facing the appliqué.

7. Kit for decorating a tyre according to the method of Claim 6, the kit comprising at least one appliqué (100) comprising at least one portion of a colour other than black, the appliqué being designed to be inserted into a recess (90) in the tyre tread, which recess opens onto the rolling surface, the recess being delimited by a bottom wall and a side wall, wherein said side wall of the recess is a closed surface or a quasi-closed surface and wherein the kit also comprises a suitable adhesive (110) for fixing the appliqué to at least a portion of said bottom or side wall of the recess.

8. Kit according to Claim 7, that also comprises a set of instructions describing at least steps (B) and (C) of the method of Claim 6.

## Patentansprüche

1. Reifen (10), der eine Lauffläche (40) umfasst, die mit einer Rollfläche versehen ist, wobei in der Lauffläche mindestens eine Vertiefung (90) gebildet ist, wobei sich die Vertiefung zur Rollfläche hin öffnet, wobei die Vertiefung durch eine untere Wand (91) und eine einzelne Seitenwand (92) begrenzt ist, wobei der Reifen außerdem mindestens eine Applikation (100; 1001-1002) umfasst, die mindestens einen Abschnitt einer anderen Farbe als Schwarz umfasst, und wobei die Applikation in die Vertiefung eingesetzt und mittels eines Klebers (110) an mindestens einem Abschnitt der unteren oder der Seitenwand befestigt ist, derart, dass der Abschnitt der Applikation einer anderen Farbe als Schwarz von einem Standpunkt sichtbar ist, der außerhalb der Lauffläche liegt und der Applikation zugewandt ist, wobei die Seitenwand der Vertiefung eine geschlossene Fläche oder eine quasigeschlossene Fläche ist.

2. Reifen nach Anspruch 1, wobei die Applikation mindestens an einem Abschnitt der unteren Wand befestigt ist.

3. Reifen nach einem der Ansprüche 1 oder 2, wobei die Applikation mindestens 80 % der Fläche der unteren Wand bedeckt.

4. Reifen nach einem der Ansprüche 1 bis 3, wobei die radial äußersten Punkte der Applikation (100) radial innerhalb der Rollfläche der Lauffläche (40) liegen.

5. Reifen nach Anspruch 4, wobei die Seitenwand der Vertiefung eine geschlossene Fläche ist und wobei sich mindestens eine Lamelle zur Vertiefung hin öffnet.

6. Verfahren zum Dekorieren eines Reifens (10), der eine Lauffläche (40) umfasst, die mit einer Rollfläche versehen ist, das folgende Schritte umfasst:
(A) Bereitstellen einer Vertiefung (90) in der Lauffläche, wobei sich die Vertiefung zur Rollfläche hin öffnet, wobei die Vertiefung durch eine untere Wand (91) und eine einzelne Seitenwand (92) begrenzt ist, wobei die Seitenwand der Vertiefung eine geschlossene Fläche oder eine quasigeschlossene Fläche ist;
(B) Einlegen einer Applikation (100; 1001-1002), die mindestens einen Abschnitt einer anderen Farbe als Schwarz umfasst, in die Vertiefung und
(C) Befestigen der Applikation mit einem Kleber (110) an mindestens einem Abschnitt der unteren oder der Seitenwand der Vertiefung, derart, dass der Abschnitt der Applikation einer anderen Farbe als Schwarz von einem Standpunkt sichtbar ist, der außerhalb der Lauffläche liegt und der Applikation zugewandt ist.

7. Kit zum Dekorieren eines Reifens gemäß dem Verfahren nach Anspruch 6, wobei das Kit mindestens eine Applikation (100) umfasst, die mindestens einen Abschnitt einer anderen Farbe als Schwarz umfasst, wobei die Applikation ausgebildet ist, um in eine Vertiefung (90) in der Reifenlauffläche eingesetzt zu werden, wobei sich die Vertiefung zur Rollfläche hin öffnet, wobei die Vertiefung durch eine untere Wand und eine Seitenwand begrenzt ist, wobei die Seitenwand der Vertiefung eine geschlossene Fläche oder eine quasigeschlossene Fläche ist und wobei das Kit außerdem einen geeigneten Kleber (110) zum Befestigen der Applikation an mindestens einem Abschnitt der unteren oder der Seitenwand der Vertiefung umfasst.

8. Kit nach Anspruch 7, das außerdem einen Satz Anweisungen umfasst, die mindestens die Schritte (B) und (C) des Verfahrens nach Anspruch 6 beschreiben.

## Revendications

1. Pneumatique (10) comportant une bande de roulement (40) pourvue d'une surface de roulement, au moins un évidement (90) étant réalisé dans la bande de roulement, l'évidement s'ouvrant sur la surface de roulement, l' évidement étant délimité par une paroi inférieure (91) et une seule paroi latérale (92), le pneumatique comportant en outre au moins une applique (100 ; 1001-1002) comportant au moins une portion de couleur non noire, et l'applique étant insérée dans l'évidement et fixée à l'aide d'un adhésif (110) à au moins une portion de ladite paroi inférieure ou latérale, de sorte que la portion de couleur non noire de l'applique soit visible depuis un point de vue à l'extérieur de la bande de roulement et en regard de l'applique, dans lequel ladite paroi latérale de l'évidement est une surface fermée ou une surface quasi-fermée.

2. Pneumatique selon la revendication 1, dans lequel l'applique est fixée à au moins une portion de ladite paroi inférieure.

3. Pneumatique selon l'une quelconque des revendications 1 et 2, dans lequel l'applique recouvre au moins 80 % de la surface de la paroi inférieure.

4. Pneumatique selon l'une quelconque des revendications 1 à 3, dans lequel les points radialement les plus à l'extérieur de l'applique (100) sont radialement à l'intérieur de la surface de roulement de la bande de roulement (40).

5. Pneumatique selon la revendication 4, dans lequel ladite paroi latérale de l'évidement est une surface fermée et dans lequel au moins une lamelle s'ouvre dans l'évidement.

6. Procédé pour décorer un pneumatique (10), comportant une bande de roulement (40) pourvue d'une surface de roulement, comportant les étapes suivantes :
(A) prévoir un évidement (90) dans la bande de roulement, l'évidement s'ouvrant sur la surface de roulement, l'évidement étant délimité par une paroi inférieure (91) et une seule paroi latérale (92), ladite paroi latérale de l'évidement étant une surface fermée ou une surface quasi-fermée;
(B) insérer une applique (100 ; 1001-1002) comportant au moins une portion de couleur non noire dans l'évidement ; et
(C) fixer l'applique à l'aide d'un adhésif (110) à au moins une portion de ladite paroi inférieure ou latérale, de sorte que la portion de couleur non noire de l'applique soit visible depuis un point de vue à l'extérieur de la bande de roulement et en regard de l'applique.

7. Kit pour décorer un pneumatique selon le procédé de la revendication 6, le kit comportant au moins une applique (100) comportant au moins une portion de couleur non noire, l'applique étant destinée à être insérée dans un évidement (90) de la bande de roulement du pneumatique, l'évidement s'ouvrant sur la surface de roulement, l'évidement étant délimité par une paroi inférieure et une paroi latérale, ladite paroi latérale de l'évidement étant une surface fermée ou une surface quasi-fermée et le kit comportant en outre un adhésif (110) adapté pour fixer l'applique à au moins une portion de ladite paroi inférieure ou latérale de l'évidement.

8. Kit selon la revendication 7, comportant en outre un mode d'emploi décrivant au moins les étapes (B) et (C) du procédé de la revendication 6.
